# EUROPEAN PATENT SPECIFICATION

(11) **EP 3 710 487 B1**
(45) Date of publication and mention of the grant of the patent: **23.10.2024**
(21) Application number: 18839514.9
(22) Date of filing: 02.11.2018
(51) Int. Cl.: C08B 15/02, C08B 37/00

(54) **METHOD FOR PRODUCTION OF MICROCRYSTALLINE CELLULOSE**
VERFAHREN ZUR HERSTELLUNG VON MIKROKRISTALLINER CELLULOSE
PROCÉDÉ DE PRODUCTION DE CELLULOSE MICROCRISTALLINE

(30) Priority: 17.11.2017 BG 11262417
(43) Date of publication of application: 23.09.2020
(73) Proprietor: Svilosa AD, 5250 Svishtov (BG)
(72) Inventor: VALCHEV, Ivo Vladimirov, 1113 Sofia (BG); DACHEV, Krassimir Banchev, 1616 Sofia (BG); VIDIMSKY, Evstati Penchev, 1756 Sofia (BG); PETRIN, Stoyko Aleksandrov, 1335 Sofia (BG); YAVOROV, Nikolay Assenov, 6137 Kazanlak municipality (BG)
(74) Representative: Kosseva, Radislava Andreeva
(86) International application number: PCT/BG2018/000040
(87) International publication number: WO 2019/095024

(56) References cited:
- WO-A1-2011/154597
- WO-A1-2011/154599
- WO-A1-2011/154601
- GERT E V ET AL: "Finely dispersed microcrystalline cellulose prepn. - by treating starting material with conc. nitric acid, squeezing, adding water,leaving to stand, and hydrolytic destruction", WPI / THOMSON,, vol. 1989, no. 46, 23 May 1989 (1989-05-23), XP002663835

## Description

### FIELD OF THE INVENTION

The current invention refers to a method for production of microcrystalline cellulose through two-stage acid hydrolysis with intermediary washing and removal of the dissolved sugars. This method allows from paper grade pulp, which contains significant amount of hemicelluloses, microcrystalline cellulose to be obtained with high brightness and parameters appropriate for usage in the pharmaceutical, cosmetics and food industries, as well as in the agriculture and chemical industries.

### BACKGROUND OF THE INVENTION

As it is known from the literature and practice, microcrystalline cellulose (MCC) is partially depolymerized cellulose with low degree of polymerization (DP). When it is free from organic and inorganic pollutants, microcrystalline cellulose has the structure of a powder with white color, without taste and smell, insoluble in water, diluted acids and in most of the organic solvents.

It's obtaining from plant fibers, the lack of toxicity, hygroscopic capacity and physiological inertness ensure not only the harmlessness, but rather the beneficial influence on the human body as excipient for healthy foods and source of dietary fibers. As nonabsorbing and unassimilated bulking fiber it supports the foods caloricity reduction, without influencing the organoleptic properties, and it is a proven fact that it brings to normal the chemical reactions in the organism, and even decreases the risk of appearance of new neoplasms.

Due to the above described as well as other properties resulting from its chemical nature, the microcrystalline cellulose is a multifunctional product with a huge widely spread and diverse appliance.

In the food industry, for example, MCC is used for improving the fluid products consistency, increasing the terms for conservation of the bulky foods and as anti-caking agent, for caloricity decreasing, increasing the expiry dates and softness of the pastry products and confectionery. It is used also as a filler for preservation and increasing the useful mass of the end products, as a texturizer, emulsifier and improver during heat treatment in meat processing, as a component for cream, cheese, ketchup, mayonnaise, mashed soups, pates, sauces, sweet fruit matters, etc.

Due to the possibility for achieving a high solidity at low pressure levels during pressing, the low friability and physical inertness, microcrystalline cellulose is used in the pharmaceutical industry for example as binding agent and filler for production of tablets and self-adhesive dental products, as well as disintegrator for powdered medical products. It is also used in biotechnologies, for example as component for the food means for in vitro cultivation.

In cosmetics, the microcrystalline cellulose is used for example for the production of creams, hair dyes and masques, tooth pastes, and powders.

In agriculture, the microcrystalline cellulose is mainly used as an additive in foods for birds and domestic animals.

Microcrystalline cellulose finds a wide appliance in the chemical industry, for example in the process of ceramics, composite materials, resins, polyurethane sorbents, thermo-stable and bituminous coverage, plastics, fire-resistant materials, emulsions, faux leather, biological protection means, welding electrodes, thickeners, papers, non-woven materials, and etc.

There are different methods for production of microcrystalline cellulose described in the literature through combination of acid hydrolysis and different other processes.

Patent US 2,978,446 Battista et al. describes the obtaining of pulp with constant DP (degree of polymerization) through acid hydrolysis and mechanical treatment. The pulp is hydrolyzed during boiling in 2,5 normal hydrochloric acid (HC1), at a temperature of about 105°C, for approximately 15 minutes up to 1 hour, followed by a mechanical fragmentation of the pulp hydrolysate in water medium. Disadvantage of this method is the high consumption of acid and the necessity of additional energy-intensive mechanical treatment.

From BG19462, an analogue with Patent US 3,954,727 is known a method for production of microcrystalline cellulose with raw materials and assistance of the mill of the present applicant and with the participation of one of the present inventors, in which the hydrolysis of the pulp is implemented with dissolved sulphuric acid at temperature from 120 to 160°C. Simultaneously with the hydrolysis is implemented also a chemical disaggregation of the product, which after that is a subject of additional bleaching, cleaning, washing and drying.

Patent US 6,228,213 reveals a process for microcrystalline cellulose production through adding of acid solution to the pulp and feeding of the thus obtained reaction mixture through an extruder, at which the pulp undergoes an acid hydrolysis and generates microcrystalline cellulose. The temperature of the extruder's drum during the hydrolysis is from 80 to 200°C. The ratio of condensation of the extruder' screw is between 1.5:1 and 3:1, preferably about 3:1. The disadvantage of the method is that the extruders are expensive, and the costs for the maintenance are quite high and require a high mechanical energy, approximately 150 kWh or more per ton dried pulp.

In international patent application WO2016182867 is described the method which allows bleached microcrystalline cellulose to be obtained, either from pulp for chemical processing, or from paper grade pulp which includes neutralization or alkalization of suspension of acid microcrystalline reaction mixture, usually obtained through acid hydrolysis or through cathode-ray irradiation, followed by adding of oxidizer to this reaction mixture.

In Patent US 9,469,695B2 is described the method for microcrystalline cellulose production, which includes hydrolysis of fibrous pulp material with an acid at increased temperature or acidification of fibrous pulp material, followed by washing and hydrolysis of the washed pulp material at increased temperature, in order a mixture from microcrystalline cellulose and hydrolysate to be obtained, followed by separation of microcrystalline cellulose from the hydrolysis, during which the mixture or the separated hydrolysate or the microcrystalline cellulose could be a subject to neutralization. A scheme for flows organization is also presented, so that part of the used chemicals during the acidification, the acid hydrolysis and/or the neutralization to be recovered.

On the grounds of the above mentioned it could be summarized that most of the known methods for microcrystalline cellulose production through acid hydrolysis of the pulp are not suitable for treatment of pulp with high hemicelluloses content, requires usage of energy-intensive additional mechanical treatments and/or chemicals for neutralization and additional bleaching, due to which exists a necessity of developing more efficient and simple production processes.

### SUMMARY OF THE INVENTION

A problem of the current invention is a simple method for production of microcrystalline cellulose to be developed, through acid hydrolysis of paper grade pulp, so that as an end-product microcrystalline cellulose to be produced, which is not required to be a subject to additional neutralization and bleaching.

The invention problem is solved through method for production of bleached microcrystalline cellulose from paper grade pulp, which includes two separate stages of acid hydrolysis with intermediary washing of the pulp with water and separation of the dissolved sugars.

The method in accordance to the invention includes the following operations:
a) first stage of acid hydrolysis during which are dissolved mainly the hemicelluloses and in lower extent the cellulose;
b) washing of the pulp after the first stage of acid hydrolysis with water, during which the dissolved sugars are removed;
c) second stage of acid hydrolysis during which the pulp degree of polymerization and particles size are decreased to typical for the microcrystalline cellulose, while keeping high brightness, excluding the necessity of additional bleaching;
d) washing with water and isolation of the obtained after the second stage of acid hydrolysis microcrystalline cellulose.

### DETAILED DESCRIPTION OF THE INVENTION

The nature of the method, in accordance to the invention consists in that as the first stage of treatment of the input material, i.e. pulp (as bone dry) with pentosan content of 0.5 to 30 weight % against its total weight and with consistency from 5% to 30%, compared to the total weight of the reaction mixture, an acid hydrolysis is carried out, in which the acid is added in amount from 0.5 to 2.5 weight percent, on the basis of the bone dried pulp weight. Hydrolysis is carried out at temperatures from 90°C to 150°C, preferably at temperatures from 110°C to 140°C, and even more advisable from 120°C to 130°C. The reaction time in the first stage of acid hydrolysis is from 10 to 180 minutes, preferably from 20 to 150 minutes, and even more advisable from 40 to 120 minutes.

Between the two stages is performed washing of the pulp with water, but neutralization is not required.

In the second stage of the method in accordance to the invention an acid hydrolysis is carried out with the washed after the first stage pulp with concentration of 5% to 30% (as bone dry), in accordance to the total weight of the reaction mixture. The acid is added in amount of 0.2 to 2.5 weight percent, on the basis of the weight of the bone dry pulp. Hydrolysis is carried out at temperatures from 100°C to 150°C, preferably at temperatures from 110°C to 140°C, and even more advisable from 120°C to 130°C. Reaction time in the second stage of hydrolysis is from 10 minutes to 180 minutes, preferably from 20 minutes to 150 minutes, and even more advisable from 40 to 120 minutes.

After the second stage of acid hydrolysis a final washing of the obtained microcrystalline cellulose with desalinated water is implemented. Part of the washing waters from second stage could be used during the intermediary washing.

The two stages of acid hydrolysis could be carried out in one and the same reactor or separately as batch or continuous process.

Unexpectedly for the person skilled in the Art it has been found that in the first step of acid hydrolysis the pulp brightness is further increased with 1 - 1.5%. The second stage of acid hydrolysis has also a purifying effect, during which from the microcrystalline cellulose are removed the adsorbed in the first stage chromophoric structures, which leads to production of microcrystalline cellulose with brightness about and above 88%, due to which is not required implementation of additional bleaching of the end product.

In accordance to the invention as an input fibrous material is used pulp, which is bleached, semi-bleached or unbleached sulphate pulp, bleached or unbleached sulphite pulp, natron pulp, pulp obtained after cooking with organic solvents or after processing of waste paper. The used pulp is from softwood, hardwood and non-wood plant raw materials, for example as straw, hemp, kenaf, ramie, bamboo, and other agricultural plant wastes containing cellulose.

The hydrolysis in the first and second stage of acid hydrolysis in the method in accordance to the invention is carried out with diluted organic acids (oxalic, formic, acetic, etc.), solvents of sodium bisulphite and sodium bisulphate and with diluted inorganic acids, preferably mineral acids as hydrochloric acid, sulfuric acid and nitric acid.

In another option of method implementation according to the invention, the first stage of acid hydrolysis is more continuous than the second one but the intermediary brightness of the pulp obtained as a reaction product should be controlled so as not to fall under 80%. After washing and removing of the dissolved sugars, shorter second stage of acid hydrolysis is carried out where the pulp degree of polymerization is decreased and after final washing by water the pulp is purified by the adsorbed chromophore structures.

The advantages of method according to the innovation are:
- the carried out acid hydrolysis in two stages with washing between stages does not allow the caramelization of the dissolved in the initial of process sugars and thus does not reduce the brightness of obtained microcrystalline cellulose;
- no further bleaching is required for obtaining of microcrystalline cellulose with brightness over 88%;
- washing of the reaction products between the acidic hydrolysis stages is sufficient and no correction of pH associated with additional chemical consumption is required;
- an additional significant advantage of two-stage acid hydrolysis process is that the process flows more uniformity.

### ENBODYMENT OF THE INVENTION

The invention is presented by the following examples that clarify it without limiting its scope of protection.

The tests are carried out by bleached hardwood pulp identifying by high brightness and pentosan content in the pulp over 18%.

The acid hydrolysis at first and second stage is carried out in rotating 2 liters laboratory autoclaves.

The autoclaves are charged with preliminary disintegrated pulp containing 30g bone dry pulp with definite consistence and to which required amount of diluted acid is added.

The autoclaves are placed and rotated in a vat with polyethylene-glycol that was previously heated to the required temperature. The time for autoclaves tempering is 5 minutes.

When the hydrolysis is completed the autoclaves are removed and cooled down by cold water.

The obtained microcrystalline cellulose is washed at buchner funnel by vacuum pump through filter with pores size 2-3 µm. The first filtrate is separated for sugars and furfural analyze at chromatographic system HPLC Dionex according to NREL Technical Report (NREL/TP-510-42623). Each sample is washed twice by deeply deionized water.

The particles size and their distribution by size is identified by laser analyzer Fritsch Analysette 22 Micro Tec Plus. The average degree of polymerization DP is defined according to European Pharmacopoeia standard and the brightness according to ISO 2470.

### Example 1

Table 1 and Table 2 show the results from two-stage acid hydrolysis with diluted sulfur acid with pulp consistency 10% at first stage and 20% at second stage. The temperature is 130°C, reaction time at maximum temperature 40 min and 60 min and acid charge (in regard to bone dry pulp) is 2% for both stages. The pulp is washed after the first acid stage with desalted water and the second stage is carried out with duration of 60 minutes.

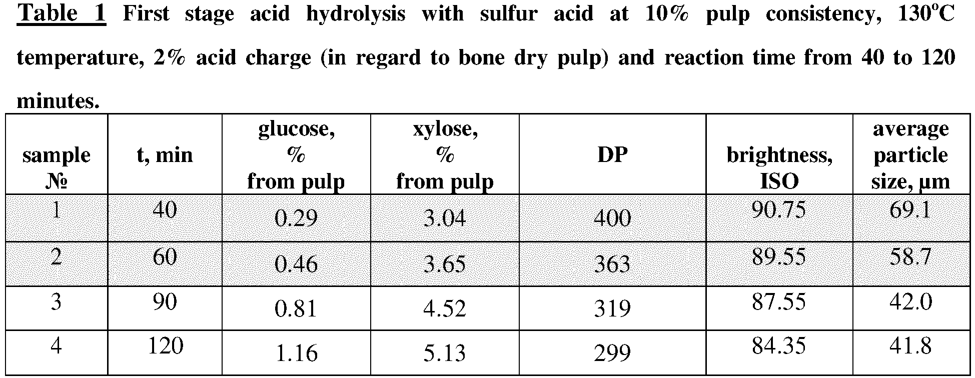

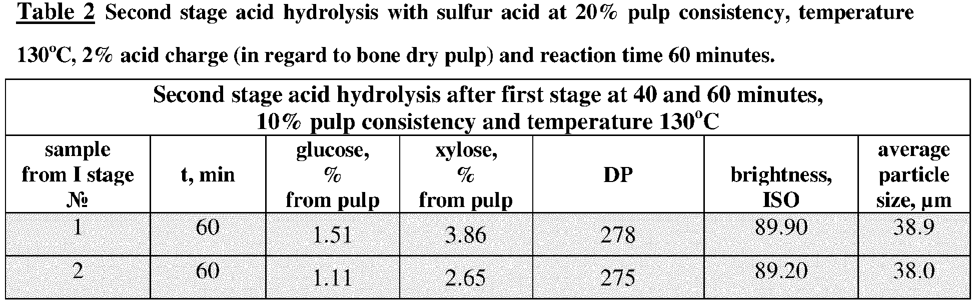

In the initial period of first acid stage it is observed pulp cleaning effect and the brightness increasing by nearly 1.5 %. This is due to the removal by hydrolysis of xylanrelated residual chromophores. During the one-stage hydrolysis the high pentosan content in hardwood paper grade pulp generates a lot of xylose in the next step of the process. The formation of caramelized sugars take place and microcrystalline cellulose brightness decreases significantly to the end of the hydrolysis process (samples 3 and 4 from Table 1).

Two-stage acid hydrolysis is a decision of that problem, due to removing by washing of the dissolved sugars and by-products. Thus the possibility for caramelization and formation of new chromophore structures, at relatively mild conditions in second stage of hydrolysis, is minimized and the microcrystalline cellulose brightness remains very high until the end of the second stage (Table 2).

### Example 2

Table 3 shows the results from two stage acid hydrolysis at short first stage with duration of 60 minutes and prolonged second stage of 90 and 120 minutes. In both stages of acid hydrolysis the acid charge in regard to bone dry pulp is 2%, the pulp consistence is 10% and the reaction temperature is 130°C. The pulp after first stage of acid hydrolysis is washed by desalted water.

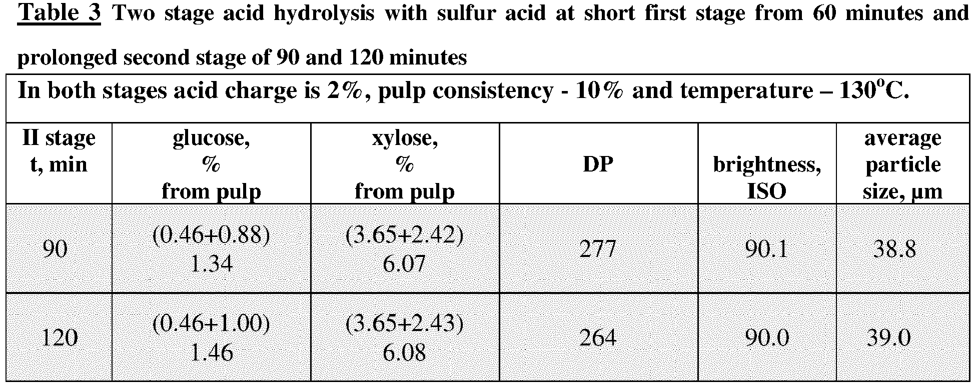

The results presented in Table 3 confirm that by extending the duration of the second stage of acid hydrolysis leads to obtaining of microcrystalline cellulose with very high brightness and decreased degree of polymerization. It is observed better particle uniformity of microcrystalline cellulose obtaining by two-stage hydrolysis compared to the one-stage process (samples 3 and 4 from Table 1).

### Example 3

Table 4 shows results from two-stage acid hydrolysis at 120minutes duration of first stage acid hydrolysis and shorter second stage of acid hydrolysis from 60minutes. In both stages of acid hydrolysis sulfur acid charge is 2% and the temperature 130°C however the pulp consistency in the second stage is 10% and 20%. After the first stage the pulp is washed by deionized water.

**Table 4 Two-stage acid hydrolysis with sulfuric acid at prolonged first stage from 120 minutes and short second stage of 60 minutes**

| **Acid charge is 2% and the temperature is 130°C in both of the stages** | | | | | | |
|---|---|---|---|---|---|---|
| **II stage t, min** | **II stage Concentr. of mass, %** | **glucose, % from pulp*** | **xylose, % from pulp*** | **DP** | **brightn ess, ISO** | **average particle size, µm** |
| 60 | 10 | (1.16+0.21) 1.37 | (5.13+0.67) 5.80 | 294 | 89.5 | 38.0 |
| 60 | 20 | (1.16+0.67) 1.83 | (5.13+1.53) 6.66 | 263 | 88.4 | 35.5 |

| | | | | | | |
|---|---|---|---|---|---|---|
| ***results from analyze of glucose and xylose after first stage, second stage and sum** | | | | | | |

The results presented in Table 4 show that the high brightness of microcrystalline cellulose is reached also for two-stage acid hydrolysis with continuous first stage although the intermediary brightness is decreased to 84% (sample 4 from Table 1). This means that the second stage of acid hydrolysis has a purifying effect where the adsorbed in first stage of the acid hydrolysis chromophore structures are removed from microcrystalline cellulose. The final brightness is over 88% and an additional bleaching is not required. At 20% pulp consistency in the second stage greater reduction of particles size is observed.

## Claims

1. Method for microcrystalline cellulose production including first stage of acid hydrolysis of pulp with pentosan content of 0.5 to 30 weight % against its total weight and pulp consistency from 5% to 30% against the total weight of the reaction mixture with diluted acid in amount of 0.5 to 2.5 weight percents on the base of bone dry pulp weight where the hydrolysis is carried out at temperatures within the range from 90°C to 150°C for reaction time from 10 to 180 minutes, **characterized with the fact that** the obtained pulp after first acid hydrolysis is washed by water, after that the washed pulp, with 5% to 30% pulp consistency against the total weight of the reaction mixture, is subject to second stage of acid hydrolysis with diluted acid in amount of 0.2 to 2.5 weight percents on the base of bone dry pulp weight where the hydrolysis is carried out at temperatures from 100°C to 150°C for reaction time from 10 to 180minutes, followed by water washing of the final reaction product.

2. Method according to claim 1, **characterized with the fact that** the temperature range of first stage acid hydrolysis is from 110°C to 140°C and preferably from 120°C to 130°C.

3. Method according to claim 1 and 2 **characterized with the fact that** the temperature range of second stage acid hydrolysis is from 110°C to 140°C and preferably from 120°C to 130°C.

4. Method according to claim 1 **characterized with the fact that** the time for first stage acid hydrolysis is from 20 to 150 minutes and preferably from 40 to 120 minutes.

5. Method according to claim 1 and 4 **characterized with the fact that** the reaction time for second stage acid hydrolysis is from 20 to 150 minutes and preferably from 40 to 120 minutes.

6. Method according to claim 1 **characterized with the fact that** the acid in the first and second stage acid hydrolysis is diluted organic acid, water solution of sodium bisulfite, water solution of sodium bisulfate, diluted inorganic acid, and preferably mineral acid.

7. Method according to claims 1 and 6 **characterized with the fact that** the diluted organic acid is oxalic, acetic, formic acid.

8. Method according to claims 1 and 6 **characterized with the fact that** the diluted mineral acid is hydrochloric acid, sulfuric acid, nitric acid.

9. Method according to claim 1 **characterized with the fact that** the pulp is bleached sulfate pulp, bleached sulfite pulp, soda pulp, pulp obtained after cooking with organic solvents or after waste paper treatment.

10. Method according to claim 1 **characterized with the fact that** the pulp is softwood, hardwood, non-wood plant materials like straw, hemp, kenaf, ramie, bamboo and other cellulose-containing agricultural plant waste.

## Patentansprüche

1. Verfahren zur Herstellung von mikrokristalliner Cellulose, umfassend eine erste Stufe der sauren Hydrolyse von Cellulose mit einem Gehalt an Pentosanen von 0,5 bis 30 Gewichtsprozent bezogen auf das Gesamtgewicht des Reaktionsgemisches, und einer Pulpenkonsistenz von 5 bis 30 % bezogen auf das Gesamtgewicht des Reaktionsgemisches, vollzogen mit verdünnter Säure in einer Menge von 0,5 bis 2,5 Gewichtsprozent bezogen auf das Gewicht der absolut trockenen Cellulose, wobei die Hydrolyse bei Temperaturen im Bereich von 90 °C bis 150 °C während einer Reaktionszeit von 10 bis 180 Minuten durchgeführt wird, und **dadurch gekennzeichnet ist, dass** die erhaltene Cellulose nach der ersten sauren Hydrolyse mit Wasser gewaschen wird, woraufhin die gewaschene Cellulose mit einer Konzentration von 5 % bis 30 % bezogen auf das Gesamtgewicht der Reaktionsmischung einer zweiten Stufe der sauren Hydrolyse mit verdünnter Säure in einer Menge von 0,2 bis 2,5 Gewichtsprozent bezogen auf das Gewicht der absolut trockenen Cellulose unterzogen wird, wobei die Hydrolyse bei Temperaturen von 100 °C bis 150 °C während einer Reaktionszeit von 10 bis 180 Minuten durchgeführt wird, gefolgt von Waschen mit Wasser des endgültigen Reaktionsprodukts.

2. Verfahren nach Anspruch 1, **dadurch gekennzeichnet, dass** die Durchführungstemperatur der ersten Stufe der sauren Hydrolyse zwischen 110 °C und 140 °C und vorzugsweise zwischen 120 °C und 130 °C liegt.

3. Verfahren nach Anspruch 1 und 2, **dadurch gekennzeichnet, dass** der Temperaturbereich der zweiten Stufe der sauren Hydrolyse zwischen 110 °C und 140 °C und vorzugsweise zwischen 120 °C und 130 °C liegt.

4. Verfahren nach Anspruch 1, **dadurch gekennzeichnet, dass** die Zeit für die Durchführung der ersten sauren Hydrolysestufe 20 bis 150 Minuten und vorzugsweise 40 bis 120 Minuten beträgt.

5. Verfahren nach Anspruch 1 und 4, **dadurch gekennzeichnet, dass** die Zeit für die Durchführung der zweiten sauren Hydrolysestufe 20 bis 150 Minuten und vorzugsweise 40 bis 120 Minuten beträgt.

6. Verfahren nach Anspruch 1, **dadurch gekennzeichnet, dass** die Säure in der ersten und zweiten sauren Hydrolysestufe eine verdünnte organische Säure, eine wässrige Lösung von Natriumbisulfit, eine wässrige Lösung von Natriumbisulfat, eine verdünnte anorganische Säure und vorzugsweise eine Mineralsäure ist.

7. Verfahren nach Anspruch 1 und 6, **dadurch gekennzeichnet, dass** es sich bei der verdünnten organischen Säure um Oxalsäure, Essigsäure, Ameisensäure handelt.

8. Verfahren nach Anspruch 1 und 6, **dadurch gekennzeichnet, dass** es sich bei der verdünnten Mineralsäure um Chlorwasserstoffsäure, Schwefelsäure, Salpetersäure handelt.

9. Verfahren nach Anspruch 1, **dadurch gekennzeichnet, dass** die Cellulose gebleichter, halbgebleichter oder ungebleichter Sulfatzellstoff, gebleichter oder ungebleichter Sulfitzellstoff, Natronzellstoff, Cellulose, die nach dem Kochen mit organischen Lösungsmitteln oder nach der Verarbeitung von Altpapier erhalten wurde, ist.

10. Verfahren nach Anspruch 1, **dadurch gekennzeichnet, dass** die Cellulose aus Nadelholz, aus Laubholz, aus pflanzlichen Nicht-Holz-Materialien wie Stroh, Hanf, Kenaf, Ramie, Bambus und anderen cellulosehaltigen landwirtschaftlichen Pflanzenresten stammt.

## Revendications

1. Procédé de production de cellulose microcristalline comprenant une première étape d'hydrolyse acide de la cellulose ayant une teneur en pentosanes de 0,5 à 30 % en poids par rapport au poids total du mélange réactionnel et une consistance de pulpe de 5 à 30 % en poids par rapport au poids total du mélange réactionnel, avec un acide dilué dans une proportion de 0,5 à 2,5 % en poids, sur la base du poids de la cellulose absolument sèche, l'hydrolyse étant effectuée à des températures de 90°C à 150°C pour des temps de réaction de 10 à 180 minutes, **caractérisé par le fait que** la cellulose obtenue après la première hydrolyse acide est lavée à l'eau, après quoi la cellulose lavée avec une concentration de 5 % à 30 % par rapport au poids total du mélange réactionnel est soumise à une deuxième étape d'hydrolyse acide avec de l'acide dilué dans une quantité de 0,2 à 2,5 % en poids, sur la base du poids de la cellulose absolument sèche, l'hydrolyse étant effectuée à des températures allant de 100°C à 150°C, pendant une durée allant de 10 minutes à 180 minutes, suivie d'un lavage à l'eau du produit final de la réaction.

2. Procédé selon la revendication 1, **caractérisé par le fait que** la température de la réalisation de la première étape d'hydrolyse acide est comprise entre 110°C et 140°C et de préférence entre 120°C et 130°C.

3. Procédé selon les revendications 1 et 2, **caractérisé par le fait que** la température de la réalisation de la deuxième étape d'hydrolyse acide est comprise entre 110°C et 140°C et de préférence entre 120°C et 130°C.

4. Procédé selon la revendication 1, **caractérisé par le fait que** la durée de réalisation de la première étape d'hydrolyse acide est de 20 à 150 minutes et de préférence de 40 à 120 minutes.

5. Procédé selon les revendications 1 et 4, **caractérisé par le fait que** la durée de réalisation de la deuxième étape d'hydrolyse acide est de 20 à 150 minutes et de préférence de 40 à 120 minutes.

6. Procédé selon la revendication 1, **caractérisé par le fait que** l'acide dans les première et deuxième étapes d'hydrolyse acide est un acide organique dilué, une solution aqueuse de bisulfite de sodium, une solution aqueuse de bisulfate de sodium, un acide inorganique dilué, et de préférence un acide minéral.

7. Procédé selon les revendications 1 et 6, **caractérisée par le fait que** l'acide organique dilué est de l'acide oxalique, acétique, formique.

8. Procédé selon les revendications 1 et 6, **caractérisée par le fait que** l'acide minéral dilué est de l'acide chlorhydrique, de l'acide sulfurique ou de l'acide nitrique.

9. Procédé selon la revendication 1, **caractérisé par le fait que** la cellulose est de la cellulose sulfatée blanchie, semi-blanchie ou non blanchie, de la cellulose sulfite blanchie ou non blanchie, de la cellulose natron, de la cellulose obtenue après ébullition avec des solvants organiques ou après traitement de vieux papiers.

10. Procédé selon la revendication 1, **caractérisé par le fait que** la cellulose provient de bois de conifères, de bois de feuillus, de matières végétales non ligneuses telles que la paille, le chanvre, le kénaf, la ramie, le bambou et d'autres résidus de plantes agricoles contenant de la cellulose.
